# EUROPEAN PATENT APPLICATION

(11) **EP 1 341 070 A2**
(43) Date of publication of application: **03.09.2003**
(21) Application number: 03003233.8
(22) Date of filing: 21.02.2003
(51) Int. Cl.: G05D 23/13

(54) **Thermostatic device for automatic mixing of hot and cold water, particularly for sanitary fixtures**

(30) Priority: 01.03.2002 IT MI20020430
(71) Applicant: O.M.B.G. S.r.l., 28010 Bolzano Novarese (Novara) (IT)
(72) Inventor: Simoni, Fabio, 28078 Romagnano Sesia (Prov.of Novara) (IT)
(74) Representative: Modiano, Guido, Dr.-Ing.

(57) **Abstract**

A thermostatic device for automatic mixing of hot and cold water, particularly for sanitary fixtures, provided with a flow control element (18) for varying the flow-rate of mixed water dispensed by the device. The flow-rate adjustment element can be operated from the outside of the main body (2) of the device in order to vary the flow-rate of water that enters the device and to optionally reduce the water flow-rate to zero by blocking, by way of a front seal, the connection of the hot water and cold water inflow ports of the thermostatic mixing cartridge to the supply ports through which the hot water and cold water are fed to the device.

## Description

The present invention relates to a thermostatic device for automatic mixing of hot and cold water, particularly for sanitary fixtures.

Thermostatic devices for automatic mixing of hot and cold water for sanitary fixtures are known.

Such devices are generally constituted by a main body which contains: a first chamber, connected to a port for feeding cold water designed to be connected to a cold water supply duct; a second chamber, connected to a hot water feed port designed to be connected to a hot water supply duct; and a third chamber, connected to an outflow port that is designed to be connected to an outlet for dispensing mixed water. Inside the main body there is also a compartment that accommodates a thermostatic mixing cartridge, which is provided with cold water inflow ports connected to the first chamber, hot water inflow ports connected to the second chamber, and a mixing chamber that is connected to the third chamber and can be connected to the inflow ports. A heat-sensitive element is arranged in the mixing chamber and is adapted to vary the opening of the inflow ports according to a mixed-water temperature that is preset by means of an adjustment positioning of the heat-sensitive element, which can be performed by means of an appropriate temperature adjustment knob located outside the main body.

Substantially, in these devices, by way of the temperature adjustment knob, the intended temperature of the mixed water is set, and the heat-sensitive element automatically varies the ratio between the opening of the cold water inflow ports and the opening of the hot water inflow ports, so as to achieve and maintain the set temperature for the mixed water.

These devices are also provided with a knob for adjusting the flow-rate of mixed water that is dispensed by the device. Usually, such flow-rate adjustment knob acts on a flow control element, which throttles or fully closes the outflow port. In practice, in most currently commercially available thermostatic devices the dispensed mixed water flow-rate is adjusted by acting directly on the output flow-rate.

These conventional devices suffer some problems. Throttling the outflow port to adjust the flow-rate of mixed water in fact causes a counterpressure in the mixing chamber of the mixing cartridge that can alter even significantly the temperature of the dispensed water with respect to the set temperature.

Furthermore, when maintenance is to be performed on the thermostatic cartridge, it is necessary to have safety taps on the supply ducts of the device, or to interrupt the use of a branch of the user on which the device is located.

In order to solve these drawbacks, devices have been proposed in which the dispensed mixed water flow-rate is adjusted by throttling the inflow ports, as disclosed for example in US - 3,792,812. These devices, which use a flow control element of the slide-valve type provided with gaskets that slide on a wall in which the supply ports are formed, suffer the problem of causing rapid wear of the gaskets involved in the adjustment of the flow-rate and of having a relatively complicated structure, since the movement for adjusting the dispensed flow-rate also involves the mixing cartridge.

The aim of the present invention is to solve the above described problems, by providing a thermostatic device for automatic mixing of hot and cold water, particularly for sanitary fixtures, in which the adjustment of the flow-rate of dispensed mixed water does not interfere with the correct operation of the device.

Within this aim, an object of the invention is to provide a device in which the adjustment of the flow-rate of dispensed water substantially does not generate counterpressures in the mixing chamber in which the heat-sensitive element of the mixing cartridge is placed.

Another object of the invention is to provide a device in which the flow-rate of dispensed water can be adjusted easily and precisely.

Another object of the invention is to provide a device that is highly durable also as regards the sealing elements involved in flow-rate adjustment.

Another object of the invention is to provide a device that has a relatively simple structure and is easy to assemble.

This aim and these and other objects that will become better apparent hereinafter are achieved by a device according to claim 1.

Further characteristics and advantages of the invention will become better apparent from the description of a preferred but not exclusive embodiment of the device according to the invention, illustrated only by way of non-limitative example in the accompanying drawings, wherein:
Figure 1 is a sectional view of the device according to the invention, taken along a plane that passes through the main axis and through the supply ports, with the flow-rate adjustment element in the fully closed position;
Figure 2 is an enlarged-scale view of a detail of Figure 1;
Figure 3 is a sectional view of the device according to the invention, taken along a plane that passes through the main axis but is angularly spaced from the sectional plane of Figure 1, and through the outflow port, with the flow-rate adjustment element in the closed position;
Figure 4 is an enlarged-scale view of a detail of Figure 3, with the flow-rate adjustment element in an open position.

With reference to the figures, the device according to the invention, generally designated by the reference numeral 1, comprises a main body 2 in which there is a first chamber 3, which is connected to a cold water supply port 4, which can be connected to a cold water supply duct 5. In the main body 2 there is a second chamber 6, which is connected to a hot water supply port 7, which can be connected to a hot water supply duct 8. A third chamber 9 is further provided in the main body 2 and is connected to an outflow port 10, which can be connected to an outlet for dispensing the mixed water, which is not shown for the sake of simplicity.

In the main body 2 there is also a compartment 11 that accommodates a thermostatic mixing cartridge, generally designated by the reference numeral 12.

The thermostatic cartridge 12 is provided with cold water inflow ports 13, which are connected to the first chamber 3, with hot water inflow ports 14, which are connected to the second chamber 6, and with a mixing chamber 15, which is connected to the third chamber 9 and can be connected to the inflow ports 13 and 14.

A heat-sensitive element 16 is arranged in the mixing chamber 15 and is adapted to vary the opening of the inflow ports 13 and 14 according to the intended temperature of the mixed water.

The inflow ports 13 and 14 are spaced one another along a main axis 11a, and the heat-sensitive element 16 acts on a temperature adjustment element 17 movable along the main axis 11a in order to vary the ratio between the opening of the inflow ports 13 and the opening of the inflow ports 14.

According to the invention, the first chamber 3 and the second chamber 6 accommodate an element for adjusting the flow-rate of the water that flows from the supply ports 4 and 7 to the inflow ports 13 and 14. Such flow-rate adjustment element is movable on command along the main axis 11a and is provided with sealing elements 19 and 20, which can engage frontally respective sealing seats 21 and 22, which are provided respectively in the first chamber 3 and in the second chamber 6, in order to interrupt the connection of the supply ports 4 and 7 to the inflow ports 13 and 14.

More particularly, the compartment 11 is substantially cylindrical, with an axis that coincides with the main axis 11a.

The first chamber 3 and the second chamber 6 extend circumferentially around the compartment 11 and are spaced one another along the main axis 11a.

The sealing seats 21 and 22 are each formed by a diaphragm, designated by the reference numerals 23 and 24 respectively, which is arranged circumferentially and is centered on the main axis 11a, respectively in the first chamber 3 and in the second chamber 6. The diaphragm 23 divides the first chamber 3 into a first portion 3a, which is connected to the supply port 4, and into a second portion 3b, which is connected to the inflow ports 13.

Likewise, the diaphragm 24 divides the second chamber 6 into a first portion 6a, which is connected to the supply port 7, and into a second portion 6b, which is connected to the inflow ports 14.

The diaphragms 23 and 24 each form a preferably substantially flat annular sealing surface, which constitutes the sealing seat 21 and 22, which lies on a plane that is substantially perpendicular to the main axis 11a. Said annular sealing surfaces can be engaged by a corresponding annular sealing element, which constitutes the sealing element 19 and 20, which is connected frontally to the flow-rate adjustment element, in order to separate, with a hydraulic seal, the first portion 3a, 6a from the second portion 3b, 6b of the corresponding chamber 3 and 6.

The flow-rate adjustment element comprises a substantially cylindrical flow control element 18, which is arranged in the main body 2 coaxially to the compartment 11 and is connected to a knob 25 that is located outside the main body 2 and can be operated to move the flow control element 18 along the main axis 11a.

The flow control element 18 has, on its cylindrical surface and at one of its axial ends, two annular supporting surfaces, which are coaxial to the compartment 11, lie on planes that are substantially perpendicular to the main axis 11a, and face the sealing seats 21 and 22 formed by the diaphragms 23 and 24. Each one of said supporting surfaces supports one of the sealing elements 19 and 20, which are conveniently constituted by O-rings.

The knob 25 is annular and is supported by the main body 2 so that it can rotate about its own axis, which coincides with the main axis 11a.

The knob 25 is connected, by means of a screw-and-nut connection 26 whose axis coincides with the main axis 11a, to the flow control element 18, which is prevented from rotating about the main axis 11a with respect to the main body 2 by an appropriately provided pin or tab 27. In this manner, a rotation of the knob 25 about the main axis 11a with respect to the main body 2 causes a translational motion of the flow control element 18 along the main axis 11a, varying the distance of the sealing elements 19 and 20 from the sealing seats 21 and 22 formed by the diaphragms 23 and 24.

It should be noted that in the main body 2 there is a cavity that is divided into the compartment 11 and into the chambers 3, 6, 9 by the various elements that are accommodated in said cavity. For example, it should be noted that the compartment 11, which accommodates the mixing cartridge 12, is formed partly coaxially in the flow control element 18 and partly in the diaphragm 24. The flow control element 18 is in turn guided, in its sliding along the main axis 11a, by a coaxial annular element 28, which is locked axially by means of a flange 29 that closes the cavity of the main body 2.

The knob 25 is connected to a ring 30, which is coaxial to the flow control element 18 and is coupled thereto by way of the screw-and-nut coupling 26, by means of pins 31 that pass through appropriately provided slots 32 formed in the flange 29.

Furthermore, in the side wall of the flow control element 18, in the region between the flow control elements 19 and 20, there is at least one radial passage 33 to allow the chamber 3 to communicate with the inflow ports 13 when the flow control element 18 is disengaged from the sealing seats 21 and 22.

Conveniently, in the flow control element 18, as shown, and/or in the main body 2, there is at least one passage 34 for connecting two surfaces of the flow control element 18, which are directed in opposite directions with respect to an intermediate reference plane that is substantially perpendicular to the main axis 11a, to a same region of the first chamber 3, as shown, and/or of the second chamber 6, in order to balance the hydraulic pressure that acts on the flow control element 18 parallel to the main axis 11a. In this manner, the knob 25 can be rotated with minimal effort, achieving simpler and more precise adjustment of the flow-rate of dispensed water.

The knob 25 can optionally be provided with an actuation lever 25a.

The mixing cartridge 12 can be constituted by a thermostatic mixing cartridge of the known type, provided with a knob 35 for setting the temperature of the mixed water by varying manually the position of the heat-sensitive element 16, and therefore of the temperature adjustment element 17 connected thereto, along the main axis 11a, in a per se known manner.

Operation of the device according to the invention, as regards the adjustment of the flow-rate of the mixed water, is as follows.

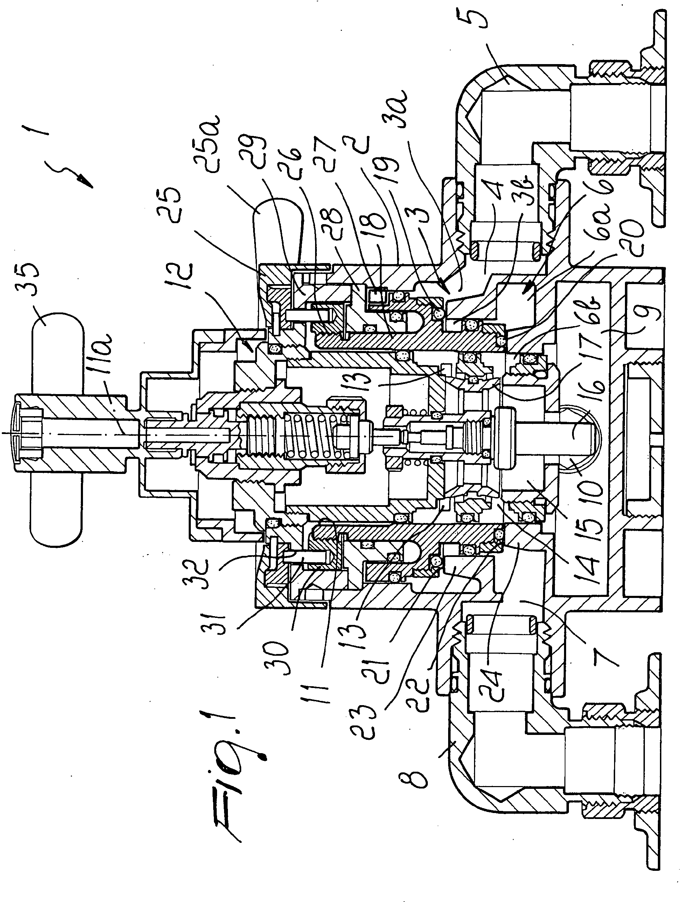

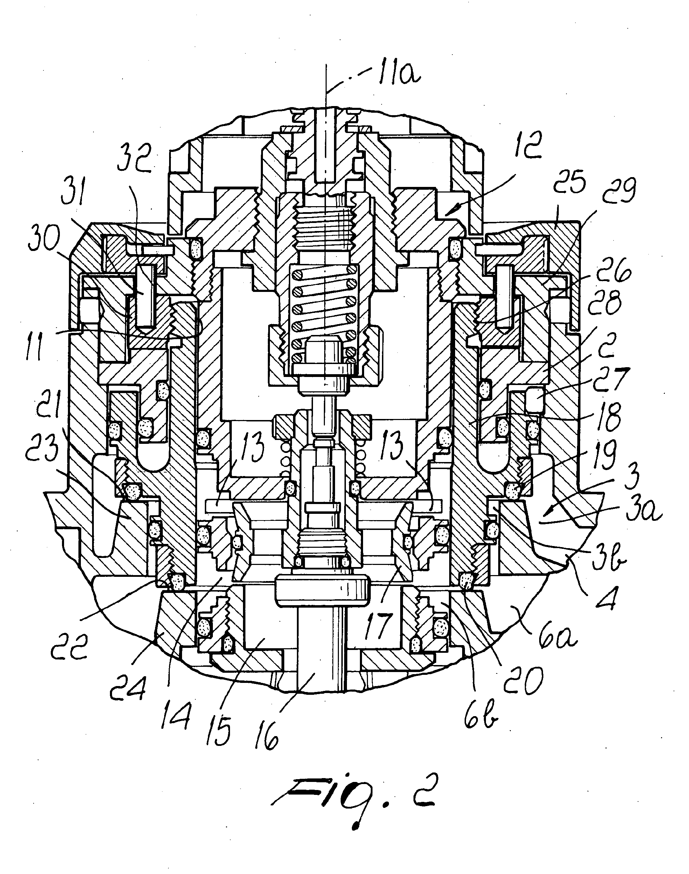

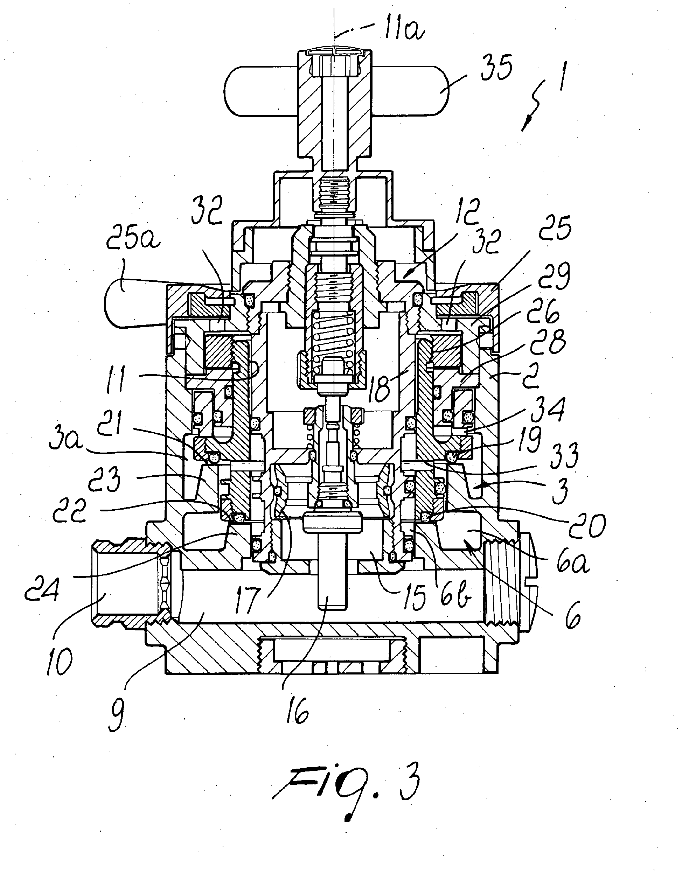

When one wishes to interrupt the dispensing of mixed water, it is sufficient to turn the knob 25 in the direction of rotation that, by way of the screw-and-nut connection 26, causes the movement of the flow control element 18 along the main axis 11a until it engages the sealing elements 19 and 20 along the sealing seats 21 and 22. In this condition, the connection of the supply port 4 to the inflow ports 13 and the connection of the supply port 7 to the inflow ports 14 is interrupted, as shown in Figures 1 to 3.

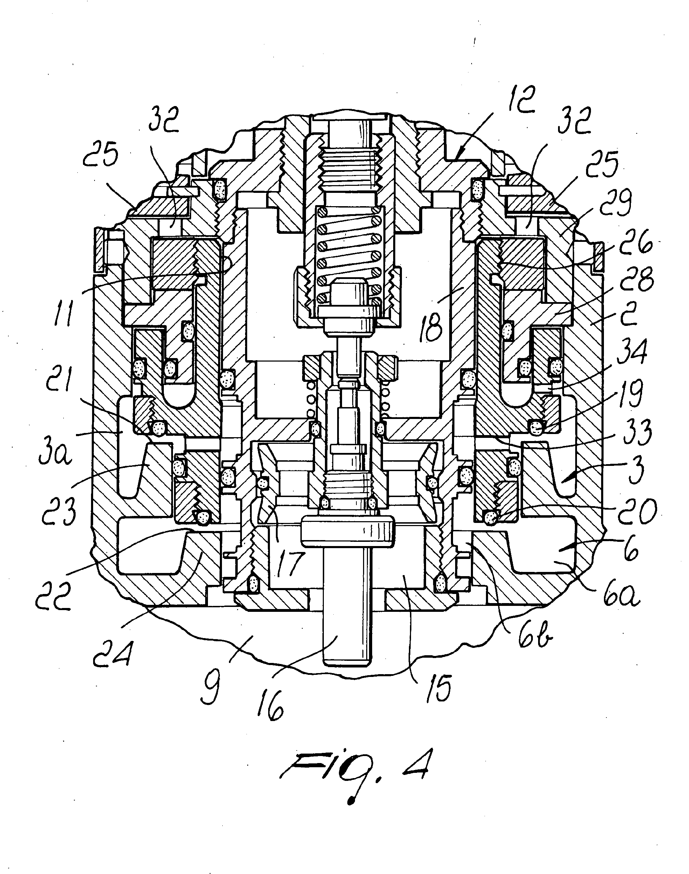

When one wishes to deliver mixed water, after setting the chosen temperature by means of the knob 35, one acts on the knob 25 by turning it in the opposite direction with respect to before, so as to produce, by way of the screw-and-nut connection 26, the translational motion of the flow control element 18 in the opposite direction, consequently disengaging the sealing elements 19 and 20 from the sealing seats 21 and 22, as shown in Figure 4. The movement of the sealing elements 19 and 20 away from the corresponding sealing seats 21 and 22 can be adjusted so as to adjust as required the flow-rate of the water flowing from the supply ports 4 and 7 to the inflow ports 13 and 14.

It should be noted that during the flow-rate adjustment operations there are no counterpressures in the mixing chamber 15 and therefore operation of the thermostatic cartridge is regular and precise.

In practice it has been found that the device according to the invention fully achieves the intended aim, since by allowing to adjust the flow-rate of the water dispensed by throttling the water that enters the mixing cartridge, it does not interfere with the operation of the mixing cartridge; moreover, since the adjustment of the flow-rate of the dispensed water and the closure of the delivery are performed by way of sealing elements that can engage frontally corresponding sealing seats, reduced wear of the sealing elements and therefore longer life of the device are observed.

Another advantage of the device according to the invention is that it allows easy and precise adjustment of the flow-rate of the dispensed mixed water.

The device thus conceived is susceptible of numerous modifications and variations, all of which are within the scope of the appended claims; all the details may further be replaced with other technically equivalent elements.

In practice, the materials used, as well as the dimensions, may be any according to requirements and to the state of the art.

The disclosures in Italian Patent Application No. MI2002A000430 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A thermostatic device for automatic mixing of hot and cold water, particularly for sanitary fixtures, which comprises a main body that contains a first chamber, connected to a cold water supply port, a second chamber, connected to a hot water supply port, and a third chamber, connected to an outflow port, said main body further forming a compartment that accommodates a thermostatic mixing cartridge, which is provided with cold water inflow ports connected to said first chamber, hot water inflow ports connected to said second chamber, and a mixing chamber that is connected to said inflow ports and to said third chamber, a heat-sensitive element being arranged in said mixing chamber and being adapted to vary the opening of said inflow ports according to the intended temperature of the mixed water, said cold water inflow ports and said hot water inflow ports being spaced one another along a main axis, said heat-sensitive element acting on a temperature adjustment element that can move along said main axis in order to vary the ratio between the opening of said cold water inflow ports and the opening of said hot water inflow ports, **characterized in that** said first and second chambers accommodate an element for adjusting the flow-rate of the water that flows through said supply ports and said inlet ports, said flow-rate adjustment element being movable on command along said main axis and being provided with sealing elements that can engage frontally against respective sealing seats provided respectively in said first chamber and in said second chamber in order to interrupt the connection of said supply ports to said inflow ports.

2. The device according to claim 1, **characterized in that** said compartment is substantially cylindrical and its axis coincides with said main axis, said first chamber and said second chamber being arranged circumferentially around said compartment.

3. The device according to claims 1 and 2, **characterized in that** each one of said sealing seats is formed by a diaphragm that lies circumferentially respectively in said first chamber and in said second chamber and divides said first chamber and said second chamber into two portions, respectively a first portion that is connected to the corresponding supply port and a second portion that is connected to the corresponding inflow port; said diaphragm forming a substantially flat annular sealing surface that lies on a plane that is substantially perpendicular to said main axis and can be engaged by a corresponding annular sealing element that is connected frontally to said flow-rate adjustment element in order to separate, with a hydraulic seal, said first portion from said second portion.

4. The device according to one or more of the preceding claims, **characterized in that** the diaphragm of said first chamber and the diaphragm of said second chamber are arranged coaxially to said compartment.

5. The device according to one or more of the preceding claims, **characterized in that** said flow-rate adjustment element comprises a substantially cylindrical flow control element, which is arranged in said main body coaxially to said compartment and is connected to a knob that is arranged outside said main body and can be operated to move said flow control element along said main axis.

6. The device according to one or more of the preceding claims, **characterized in that** said flow control element has two annular supporting surfaces that are coaxial to said compartment and are arranged on planes that are substantially perpendicular to said main axis and face the sealing surfaces formed by said diaphragms, each one of said supporting surfaces supporting one of said annular sealing elements.

7. The device according to one or more of the preceding claims, **characterized in that** said knob is annular and is supported so that it can rotate about its own axis, which coincides with said main axis, by said main body.

8. The device according to one or more of the preceding claims, **characterized in that** said knob is connected, by means of a screw-and-nut connection, to said flow control element, which is prevented from rotating about said main axis with respect to said main body, for a movement of said flow control element along said main axis following the rotation of said knob about said main axis with respect to said main body.

9. The device according to one or more of the preceding claims, **characterized in that** in said flow control element and/or in said main body there is at least one passage for connecting two surfaces of said flow control element, which are directed in opposite directions with respect to an intermediate reference plane that is substantially perpendicular to said main axis, to a same region of said first chamber and/or of said second chamber in order to balance the hydraulic pressure that acts on said flow control element parallel to said main axis.
